# EUROPÄISCHE PATENTSCHRIFT

(11) **EP 0 951 596 B1**
(45) Veröffentlichungstag und Bekanntmachung des Hinweises auf die Patenterteilung: **10.10.2001**
(21) Anmeldenummer: 97954824.5
(22) Anmeldetag: 19.12.1997
(51) Int. Cl.: D06F 39/00, C02F 1/00

(54) **WASCHVERFAHREN MIT ABWASSERRÜCKFÜHRUNG**
WASHING PROCESS WITH WASTE WATER RECYCLING
PROCEDE DE LAVAGE AVEC RECYCLAGE DES EAUX USEES

(30) Priorität: 07.01.1997 DE 19700155
(43) Veröffentlichungstag der Anmeldung: 27.10.1999
(73) Patentinhaber: Cognis Deutschland GmbH, 40589 Düsseldorf (DE)
(72) Erfinder: GOEBEL, Irmhild, D-40225 Düsseldorf (DE); GUHL, Walter, D-42781 Haan (DE); WIESER, Hans-Josef, D-40589 Düsseldorf (DE)
(86) Internationale Anmeldenummer: EP9707170
(87) Internationale Veröffentlichungsnummer: WO9830746

(56) Entgegenhaltungen:
- EP-A- 0 578 006
- DE-A- 3 910 089
- DE-A- 4 124 915
- DE-C- 4 407 734
- FR-A- 2 589 895
- US-A- 3 841 116

## Beschreibung

Die Erfindung betrifft ein Verfahren zum Reinigen von verschmutztem Waschgut, wobei die Abwässer aus dem Verfahren chemisch, mechanisch und biologisch gereinigt und anschließend in das Verfahren zurückgeführt werden.

Die industrielle Reinigung von verschmutztem Waschgut wird üblicherweise in Waschmaschinen unter Verwendung einer waschmittelhaltigen wäßrigen Flotte durchgeführt. Nach dem eigentlichen Waschvorgang wird das Waschgut mehrfach mit Wasser gespült und anschließend getrocknet und weiterverarbeitet. Bei diesem Prozeß stellt die Entsorgung des anfallenden Abwasser, welches mit Waschmittelresten und weiteren Inhaltsstoffen belastet ist einen erheblichen Kostenfaktor dar. Bei der Wäsche von Federn bzw, Daunen oder bei der Lederrohhautwäsche ist das Abwasser beispielsweise mit großen Mengen an emulgiertem Fett belastet. Bei der Wäsche von gefärbtem Baumwollstoffen, beispielsweise bei der mechanischen Stone Wash-Wäscherei mit Bimssteinen oder der Blue Jean-Wäscherei enthält das Abwasser gelöste und/oder dispergierte Farbstoffe und Faserreste.

Aufgrund gestiegener Umweltauflagen darf das unbehandelte Abwasser den Prozeß nicht mehr verlassen, so daß eine Reinigung des Abwassers unumgänglich ist. Auch der hohe Verbrauch an Frischwasser für den Reinigungsprozeß, gerade in Ländern und Regionen mit geringen Wasserresourcen, stellt einen erheblichen Kostenfaktor dar.

Aus der DE 44 07 734 ist ein Verfahren zur Reinigung und Wiederverwendung von tensidhaltigen Abwässern bekannt, wobei die tensidhaltigen Abwässer zunächst physikalisch gereinigt werden und anschließend einer biologischen Reinigung unterzogen werden. Dieses Dokument offenbart keine chemische Reinigung, die der biologischen vorgeschaltet ist.

Daher besteht ein Bedarf für ein Reinigungsverfahren für verschmutztes Waschgut, welches einen möglichst geringen Wasserverbrauch aufweist und somit kostengünstiger als bekannte Verfahren betrieben werden kann und gleichzeitig zu einer verringerten Belastung der Umwelt durch Abwasser führt.

Gegenstand der vorliegenden Anmeldung ist daher ein Waschverfahren für mit Fett verschmutztes Waschgut, wobei das Waschgut mit einer wäßrigen waschmittelhaltigen Flotte in Kontakt gebracht und anschließend mindestens einmal mit Wasser gespült wird und das Abwasser des Wasch- und Spülgangs gesammelt, chemisch, mechanisch und biologisch gereinigt und dann in das Waschverfahren zurückgeführt wird, wobei die Reinigung des Abwassers erfolgt indem das Abwasser ganz oder teilweise
a) nach Zugabe eines Spaltmittels in einem Fettabscheider behandelt und anschließend
b) durch Flotation und/oder Sedimentation mechanisch vorgereinigt wird und das gereinigte Abwasser sowohl für den Spülgang als auch, nach Zugabe des Waschmittels, für den Waschgang verwendet wird, wobei die chemische Reinigung vor der biologischen erfolgt.

Unter fettverschmutztem Waschgut wird im Rahmen dieser Anmeldungen Waschgut verstanden, welches 0,3 bis 16 Gew.-% Fett, bezogen auf das Gewicht des Waschguts, enthält. Unter Fett werden im Rahmen dieser Anmeldung natürliche oder synthetische Glycerinester höherer Fettsäuren verstanden, wie sie beispielsweise in Römpps Chemie Lexikon, Band 2, Seiten 1339 - 1342, 1990, beschrieben werden. Insbesondere geeignet ist das erfindungsgemäße Verfahren für die Reinigung von Federn oder Daunen. Diese enthalten neben Fett noch Hautteilchen, Blut, Kot, pflanzliche Verunreinigungen und große Mengen Staub. Auch bei der Wäsche von Leder, insbesondere von Lederrohhäuten, liegt fettverschmutztes Waschgut im Sinne der vorliegenden Anmeldung vor.

Das erfindungsgemäße Verfahren eignet sich aber auch für die Wäsche von farbstoffverschmutzem Waschgut, d.h. im Rahmen dieser Anmeldung von Waschgut, welches bei der Wäsche Farbstoffe in das Abwasser abgibt. In diesem Fall ist ein Waschverfahren Gegenstand der Anmeldung, bei dem das Waschgut mit einer wässrigen, waschmittelhaltigen Flotte in Kontakt gebracht und anschließend mindestens einmal mit Wasser gespült wird und das Abwasser des Wasch- und Spülgangs gesammelt, chemisch, mechanisch und biologisch gereinigt und dann in das Waschverfahren zurückgeführt wird, wobei die Reinigung des Abwassers erfolgt, indem das Abwasser ganz oder teilweise
c) durch Reaktion mit einem geeigneten Oxidationsmittel und anschließend
d) durch Flotation und/oder Sedimentation mechanisch vorgereinigt wird und das gereinigte Abwasser sowohl für den Spülgang als auch, nach Zugabe des Waschmittels, für den Waschgang verwendet wird, wobei die chemische Reinigung vor der biologischen Reinigung erfolgt.

Waschgut, welches Farbstoffe in das Abwasser abgibt sind beispielsweise frisch gefärbte Baumwollstoffe oder andere textile Flächengewebe, bei denen durch eine Wäsche überschüssiger Farbstoff entfernt werden soll wie beispielsweise bei der mechanischen Stone Wash-Wäsche mit Bimssteinen oder der Blue Jean-Wäsche.

Die Wäsche des verschmutzten Waschguts erfolgt in einer geeigneten Waschmaschine, beispielsweise einer Zylinder- oder einer Waschschleudermaschine. Die Wäsche wird üblicherweise bei Temperaturen zwischen 5 °C und 60 °C durchgeführt. Bei der Federwäsche vorzugsweise aber mit kaltem Wasser bei Temperaturen zwischen 20 °C und 30 °C. Bei der Blue Jeans-Wäsche wird üblicherweise bis 60 °C gewaschen.

Als Waschmittel für die Reinigung des Waschguts können alle dem Fachmann für diesen Verwendungszweck bekannten biologisch aufbaubaren Mittel eingesetzt werden. Diese enthalten üblicherweise anionische, kationische und/oder nichtionische Tenside. Besonders vorteilhaft ist die Verwendung von Waschmitteln auf Basis nichtionischer Tenside, beispielsweise von Fettalkoholen mit 7 bis 15 C-Atomen, die mit 3 bis 10 Mol Ethylen- und/oder Propylenoxid pro Mol Fettalkohol umgesetzt worden sind. Weitere geeignete Waschmittelinhaltsstoffe sind Diethylenglykolether, insbesondere Diethylenglykolmonobutylether und weiterhin Umsetzungsprodukte von Ethylen- und/oder Propylenoxid mit Fettsäuren. Besonders geeignet sind Umsetzungsprodukte aus Fettsäuren mit 10 bis 20 C-Atomen mit 8 bis 12 Mol Ethylenoxid pro Molekül Fettsäure.

Die Menge an verwendetem Waschmittel hängt hauptsächlich vom Verschmutzungsgrad des Waschguts ab. Vorzugsweise wird das Waschmittel in Mengen von 0,1 bis 5 Gew.-%, bezogen auf das Gewicht des Waschguts verwendet. Das erfindungsgemäße Verfahren wird weiterhin so gestaltet, daß das Mengenverhältnis zwischen Waschgut und Waschwasser vorzugsweise zwischen 1 : 5 und 1 : 15 beträgt. Neben den oben beschriebenen Waschmitteln können im erfindungsgemäßen Verfahren im Wasch- und den Spülschritten noch weitere Stoffe verwendet werden, beispielsweise Antistatika, Geruchsinhibitoren, Bleichmittel, Wasserenthärter, Mittel zum Bläuen oder bakteriostatische Mittel. Diese Mittel werden der Wasch- oder Spülflotte in der dem Fachmann bekannten Mengen, üblicherweise zwischen 0,1 bis 3 Gew.-%, bezogen auf das Gewicht des Waschguts zugesetzt.

Das erfindungsgemäße Verfahren zeichnet sich dadurch aus, daß das in den Wasch- und Spülschritten verwendete Wasser gereinigtes Abwasser enthält, welches in das Verfahren zurückgeführt worden ist. Dadurch sinkt der Verbrauch an Frischwasser und damit die Kosten für die Wäsche. Vorzugsweise enthält das im Verfahren eingesetzte Wasser zu 80 Gew.-% gereinigtes Abwasser. Das Verfahren kann aber vorteilhafterweise so gestaltet werden, daß der Anteil an Frischwasser, der dem Kreislauf zugesetzt werden muß, auf 10 Gew.-% reduziert werden kann. Damit wird eine fast vollständige Rückgewinnung des Abwassers ermöglicht. Die Wasserverluste sind überwiegend auf Verdunstung zurückzuführen bzw, auf den Austrag von Wasser durch die Feuchtigkeit des Waschguts nach Durchlaufen des Waschverfahrens.

Nach dem Waschschritt wird das Waschwasser abgepumpt und das Waschgut anschlieβend mit Wasser gespült. Durch den Spülschritt werden auf dem Waschgut anhaftende Waschmittelreste bzw. Fett oder Farbstoffe und ggf. Feststoffe abgespült, bis das Spülwasser klar abläuft. Dies kann in der Waschmaschine selbst oder in einem separaten Spülaggregat durchgeführt werden, vorzugsweise werden die Spülschritte in der Waschmaschine durchgeführt.

Das Mengenverhältnis zwischen Waschgut und Spülwasser liegt pro Spülgang vorzugsweise zwischen 1 : 5 und 1 : 40. Das Waschgut wird mindestens einmal mit Wasser gespült, vorzugsweise wird aber mehrfach mit Wasser gespült, insbesondere zwischen 3 und 6 mal.

Das erfindungsgemäße Waschverfahren wird vorteilhafterweise so gestaltet, daß zur Wäsche von 100 kg Waschgut insgesamt, also für den Wasch- und die Spülschritte, zwischen 3 und 6 Kubikmeter Wasser benötigt werden.

Auch die Abwässer aus den Spülgängen werden gesammelt, mit dem Abwasser des Waschschritts vereinigt, chemisch und mechanisch und dann biologisch gereinigt und dem Verfahren wieder zugeführt. Dazu werden die Abwässer aus den Wasch- und den Spülschritten zunächst ganz oder teilweise chemisch und mechanisch vorgereinigt.

Im Falle von fetthaltigen Verschmutzungen wird dem Abwasser zunächst ein geeignetes Mittel, welches die Fett-Wasser-Emulsion aufspaltet, zugegeben. Als Spaltmittel werden vorzugsweise Eisensalze, wie FeCl₃ verwendet, aber auch AlCl₃ oder Mischungen mit Eisensalzen können verwendet werden. Dabei ist es bevorzugt, daß das Spaltmittel in Mengen zwischen 1 und 10 g/m³ Abwasser, vorzugsweise zwischen 2 und 5 g/m³ Abwasser verwendet wird.

Dann wird das chemisch behandelte Abwasser in einen Fettabscheider geleitet. Dabei können alle dem Fachmann bekannten Anlagen und Vorrichtungen für diesen Zweck verwendet werden. Die abgeschiedenen Fetttropfen schwimmen auf der Wasseroberfläche auf und werden mechanisch entfernt.

Das so vorgereinigte Abwasser wird anschließend durch Flotation und/oder Sedimentation von den ggf. vorhandenen Feststoffen befreit. Bevorzugt wird sowohl eine Sedimentation zur Entfernung grober Feststoffe, als auch eine Flotation zur Entfernung von feinteiligem Schmutz, wie zum Beispiel Federnstaub, durchgeführt. Auch dieser Schritt kann in allen dem Fachmann bekannten Anlagen zur Flotation bzw. Sedimentation durchgeführt werden.

Wird Waschgut gewaschen, welches Farbstoffe an das Abwasser abgibt, erfolgt die chemische Reinigung, indem dem Abwasser zunächst ein geeignetes Oxidationsmittel zugegeben wird, welches mit den im Wasser gelösten oder dispergierten Farbstoffen reagiert. Vorzugsweise wird im erfindungsgemäßen Verfahren als Oxidationsmittel Ozon verwendet.

Das chemisch und mechanisch vorbehandelte Abwasser wird dann in eine biologische Klärstufe überführt, in der das Abwasser von den Tensidresten gereinigt wird. Die biologische Klärstufe besteht üblicherweise aus einem Festbettreaktor und Belebtschlamm. Üblicherweise wird in derartigen Anlagen ein Abbau von mehr als 95 Gew.-% der Tenside erreicht. Das gereinigte Abwasser wird in ein Nachklärbecken verbracht, um den Schlamm vom Wasser zu trennen. Der dort anfallende Schlamm wird entwässert und kann dann weiterverwendet werden, beispielsweise als Dünger in der Landwirtschaft.

Das so gereinigte Abwasser kann bereits für den Wasch- und den Spülgang wiederverwendet werden. Es hat sich aber als vorteilhaft erwiesen, das Abwasser nach der biologischen Reinigung in einem Nachbehandlungsschritt durch Flockung unter Zugabe eines Flockungshilfsmittels weiter zu reinigen. Durch diese Behandlung wird Bakterienmasse bzw. Belebtschlamm, der aus der biologischen Klärstufe ausgetragen wurde, entfernt. Als Flockungsmittel in dieser Nachbehandlung können alle dem Fachmann für diesen Verwendungszweck bekannten Verbindungen verwendet werden, vorzugsweise werden anionisch modifizierte Polyacrylamide verwendet. Das Flockungsmittel wird dazu in Mengen zwischen 0,1 und 2 g/m³ Abwasser, vorzugsweise in Mengen zwischen 0,5 und 1 g/m³ Abwasser verwendet. Es kann auch bevorzugt sein, das Abwasser in Anschluß an die Nachbehandlung zu filtrieren, bevor es in die Wasch- und Spülschritte des Verfahrens zurückgeführt wird. Dieses filtrierte Wasser eignet sich insbesondere für den letzten Spülgang des Verfahrens.

In einer besonders bevorzugten Ausgestaltung des erfindungsgemäßen Verfahrens wird nur das Abwasser des Wasch- und des ersten Spülgangs chemisch vorbehandelt und das verbrauchte Wasser der weiteren Spülgänge in einem Ausgleichsbecken gesammelt. Das chemisch vorbehandelte Abwasser wird mit dem Wasser aus dem Ausgleichsbecken vereinigt und die vereinigten Abwässer werden dann durch Flotation und/oder Sedimentation weiter vorgereinigt und anschließend der biologischen Klärstufe zugeführt.

Es kann auch vorteilhaft sein, das Verfahren so zu gestalten, daß das Abwasser des Waschschritts gereinigt und dieses gereinigte Abwasser in den Spülaggregaten im Gegenstrom eingesetzt wird, Das Abwasser aus den Spülschritten wird dann, nach Zugabe der benötigten Wasch- und sonstigen Hilfsmittel zum Waschen verwendet und anschließend wieder dem Reinigungsprozeß unterworfen.

Das erfindungsgemäße Verfahren ermöglicht es kostengünstig verschmutztes Waschgut zu waschen. Dabei wird das Waschgut in der Regel chargenweise gereinigt. Das anfallende Abwasser wird gereinigt, wobei, vorzugsweise kontinuierlich, in einem Kreislauf geführt wird. Um die Reinigungsleistung der biologischen Klärstufe zu erhalten muß aber kontinuierlich nährstoffhaltiges Wasser durch die Klärstufe geleitet werden. Somit stellt sich das Problem, das Verfahren auch bei niedriger Belastung mit Abfallstoffen bzw. in arbeitsfreien Zeiten so zu gestalten, daß die biologische Klärstufe ihrer Reinigungsleistung beibehält, da der Bakterienrasen und/oder der Belebtschlamm ohne ausreichende Nährstoffe aus dem Abwasser schnell an Aktivität verlieren würde. Es hat sich daher als vorteilhaft erwiesen, das Verfahren in diesen Zeiten so zu gestalten, daß das Wasser im Kreislauf zwischen dem Ausgleichsbecken und der biologischen Klärstufe geführt wird. Um die Aktivität des Bakterienrasen bzw. der Bakterienflocken zu erhalten wird dem Wasser eine geeignete Bakteriennahrung in ausreichenden Mengen zugesetzt. Diese führt den Bakterien die fehlenden Nährstoffe, insbesondere Stickstoff und Phosphor zu.

### Beispiel

Als Beispiel für das erfindungsgemäße Waschverfahren wird eine Fedemwäsche beschrieben:
Die Abbildung 1 zeigt ein Fließschema des Verfahrens:

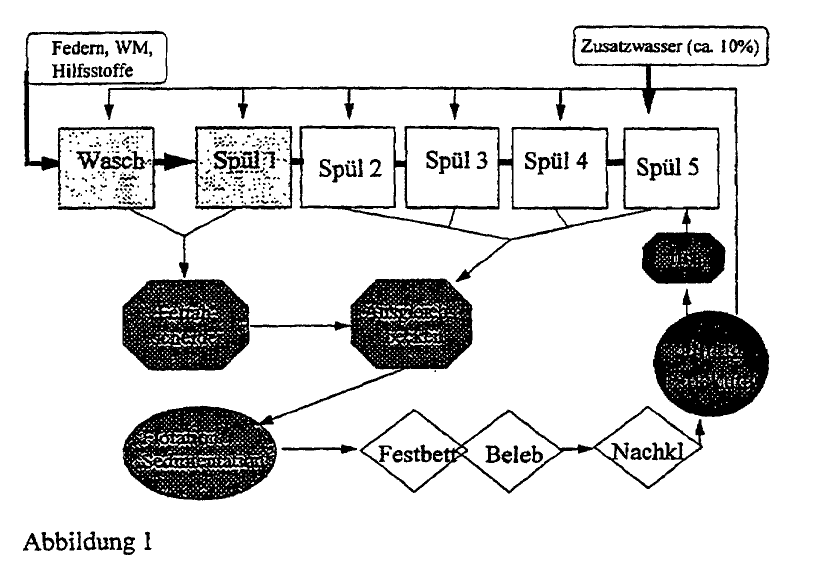

Hierzu wurden für 100 kg Federn
1000 l Wasser in der Wäsche
1000 l Wasser in der 1. Spülung
500 l Wasser in der 2. Spülung
500 l Wasser in der 3. Spülung
500 l Wasser in der 4. Spülung
1000 l Wasser in der 5. Spülung,
verwendet.

Die Wäsche und die Spülgänge wurden in einer Waschmaschine durchgeführt. Das Verhältnis Waschwasser zu Federn betrug 1 : 10. Die Federn enthielten als Verunreinigungen Feststoffe (Federnstaub etc.) und ca. 6,5 % Fett. Auf den Federn verblieben nach der Wäsche etwa 0,5 - 1 % Fett, es gelangten also in 1 1 Waschflotte ca. 5,5 - 6,0 g Fett. Geht man beim Fett von der Basis Stearinsäure aus, entsprechen 1 g Fett ca. 750 mg org. C, bzw. 6 g Fett etwa 4500 mg org. C. Die Waschflotte enthielt pro 100 kg Fedem 3 kg Waschmittel sowie 0,5 kg Hilfsstoffe. Das WM enthielt 70 % organisches Material, davon sind ca. 2/3 org. C: 3 g WM enthalten also 1400 mg org. C. Der Hilfsstoff enthält 50 % organisches Material, davon sind ca. 2/3 org. C: 0,5 g Hilfsstoff enthalten also 200 mg org. C.

11 Waschflotte enthielt an org. C aus:

| | |
|---|---|
| Fett | 4500 mg |
| WM | 1400 mg |
| Hilfsstoff | 200 mg |
| Gesamt | 6100 mg |

Aus Waschflotte und Spülung 1 wurden < 3 g/l Fett, ≤ 1 g/l WM-Inhaltsstoffe, ≤ 0,2 g/l Hilfsmittelinhaltsstoffe und eine unterschiedliche Menge an Feststoffen ausgetragen. Diese wurden nach einer Emulsionsspaltung mit einem Hilfsmittel auf Basis Metallsalz (*Microfloc EFW Fa. Henkel)* in den Fettabscheider eingebracht. Nach der Fettabscheidung enthielt das Abwasser noch < 1 mg/l Fett. Die übrigen Wasserinhaltsstoffe wurde zu 20 - 30 % entfernt: also verblieben 800 mg/l WM-Inhaltsstoffe, 150 mg/l Hilfsmittelinhaltsstoffe und eine unterschiedliche Menge an Feststoffen.

Es verblieben maximal in 11 vorgereinigtem Abwasser an org. C:

| | |
|---|---|
| Fett | 0,7 mg |
| WM | 500 mg |
| Hilfsstoff | 100 mg |
| Gesamt | 600 mg |

Das vorgereinigte Abwasser (aus Wäsche und Spülung 1) und das Abwasser der übrigen Spülungen wurden in einem Ausgleichsbecken vereinigt und dann in die Flotation/Sedimentation überführt. Durch Zusammenführung der beiden Abwässer veränderte sich der Abwasserinhalt wie folgt:

| | Substanz [mg/l] | org. C [mg/l] |
|---|---|---|
| Fett | 0,5 | 0,3 |
| WM | 350 | 225 |
| Hilfsstoff | 70 | 45 |
| Gesamt | | 270 |

Das Abwasser mit diesen Inhaltsstoffen wurde in der Flotation/Sedimentation von den Feststoffen befreit. Dieses Abwasser wurde zur biologischen Reinigung in einen Tauchtropfkörperreaktor eingebracht. Dieser besteht aus einem Festbettreaktor (Räder mit Aufwuchs) und Belebtschlamm. Bei einer Aufenthaltszeit von ca. 12 h kann von einem biologischen Abbau von >> 95 % ausgegangen werden.

Nach der biologischen Reinigung ergab sich folgender C-Gehalt pro Liter Abwasser:

| | |
|---|---|
| Fett | 0,3 mg |
| WM | 45 mg |
| Hilfsstoff | 9 mg |
| Gesamt | <55 mg |

Das gereinigte Abwasser aus der Belebung wurde in ein Nachklärbecken geleitet, um den Schlamm vom Wasser zu trennen. Danach wurde zur weiteren Reinigung eine Flockung/Fällung unter Zugabe eines Flockungsmittels auf Basis eines anionisch modifizierten Polyacrylamids durchgeführt. Das so aufbereitete Wasser wurde für die Wäsche und die Spülungen 1 - 4 direkt verwendet. Das Restwasser wurde einer Filtration zur weiteren Reinigung und Entsalzung unterzogen. Danach wurde es für den 5. Spülgang verwendet. Der aufgetretene Wasserverlust wurde durch Frischwasser (ca. 10 %) in der Spülung 5 ersetzt.

## Patentansprüche

1. Waschverfahren für mit Fett verschmutztes Waschgut, wobei das Waschgut mit einer wäßrigen waschmittelhaltigen Flotte in Kontakt gebracht und anschließend mindestens einmal mit Wasser gespült wird und das Abwasser des Wasch- und Spülgangs gesammelt, chemisch, mechanisch und biologisch gereinigt und dann in das Waschverfahren zurückgeführt wird, wobei die Reinigung des Abwassers erfolgt indem das Abwasser ganz oder teilweise
a) nach Zugabe eines Spaltmittels in einem Fettabscheider behandelt und anschließend
b) durch Flotation und/oder Sedimentation mechanisch vorgereinigt wird und das gereinigte Abwasser sowohl für den Spülgang als auch, nach Zugabe des Waschmittels, für den Waschgang verwendet wird, **dadurch gekennzeichnet, daß** die chemische Reinigung vor der biologischen erfolgt.

2. Verfahren nach Anspruch 1, **dadurch gekennzeichnet, daß** als fettverschmutztes Waschgut Federn oder Daunen verwendet werden.

3. Verfahren nach Anspruch 1, **dadurch gekennzeichnet, daß** als fettverschmutztes Waschgut Leder verwendet wird.

4. Waschverfahren für mit Waschgut das mit Farbstoffen verschmutzt ist, wobei das Waschgut mit einer wäßrigen waschmittelhaltigen Flotte in Kontakt gebracht und anschließend mindestens einmal mit Wasser gespült wird und das Abwasser des Wasch- und Spülgangs gesammelt, chemisch, mechanisch und biologisch gereinigt und dann in das Waschverfahren zurückgeführt wird, wobei die Reinigung des Abwassers erfolgt indem das Abwasser ganz oder teilweise
a) durch Reaktion mit einem geeigneten Oxidationsmittel und anschließend
b) durch Flotation und/oder Sedimentation mechanisch vorgereinigt wird und das gereinigte Abwasser sowohl für den Spülgang als auch, nach Zugabe des Waschmittels, für den Waschgang verwendet wird, **dadurch gekennzeichnet, daß** die chemische Reinigung vor der biologischen erfolgt.

5. Verfahren nach Anspruch 4, **dadurch gekennzeichnet, daß** als Oxidationsmittel Ozon verwendet wird.

6. Verfahren nach Anspruch 4 oder 5, **dadurch gekennzeichnet, daß** als Waschgut gefärbtes Baumwollgewebe verwendet wird.

7. Verfahren nach einem der Ansprüche 1 bis 6, **dadurch gekennzeichnet, daß** das im Wasch- und Spülgang verwendete Wasser zu mindestens 80 % gereinigtes Abwasser enthält.

8. Verfahren nach einem der Ansprüche 1 bis 7, **dadurch gekennzeichnet, daß** das Mengenverhältnis zwischen Waschgut und Waschwasser zwischen 1 : 5 und 1 : 15 beträgt.

9. Verfahren nach einem der Ansprüche 1 bis 8, **dadurch gekennzeichnet, daß** das Waschmittel in Mengen von 1 bis 5 Gew.-%, bezogen auf das Gewicht des Waschguts, verwendet wird.

10. Verfahren nach einem der Ansprüche 1 bis 9, **dadurch gekennzeichnet, daß** das Mengenverhältnis zwischen Waschgut und Spülwasser pro Spülgang zwischen 1 : 5 und 1 : 40 beträgt.

11. Verfahren nach einem der Ansprüche 1 bis 10, **dadurch gekennzeichnet, daß** das Waschgut mehrfach mit Wasser gespült wird, vorzugsweise 3 bis 6 mal.

12. Verfahren nach einem der Ansprüche 1 bis 11, **dadurch gekennzeichnet, daß** als Spaltmittel FeCl₃, AlCl₃ oder Mischungen dieses Verbindungen verwendet werden.

13. Verfahren nach einem der Ansprüche 1 bis 11, **dadurch gekennzeichnet, daß** das Spaltmittel in Mengen zwischen 1 und 10 g/m³ Abwasser, vorzugsweise zwischen 2 und 5 g/m³ Abwasser verwendet wird.

14. Verfahren nach einem der Ansprüche 1 bis 13, **dadurch gekennzeichnet, daß** das Abwasser nach der biologischen Reinigung in einem Nachbehandlungsschritt durch Flockung unter Zugabe eines Flockungshilfsmittels gereinigt wird.

15. Verfahren nach Anspruch 14, **dadurch gekennzeichnet, daß** als Flockungsmittel in der Nachbehandlung anionisch modifizierte Polyacrylamide verwendet werden.

16. Verfahren nach Anspruch 14 oder 15, **dadurch gekennzeichnet, daß** das Flokkungsmittel in Mengen zwischen 0,1 und 2 g/m³ Abwasser, vorzugsweise in Mengen zwischen 0,5 und 1 g/m³ Abwasser verwendet wird.

17. Verfahren nach einem der Ansprüche 1 bis 16, **dadurch gekennzeichnet, daß** nur das Abwasser des Wasch- und des ersten Spülgangs chemisch vorbehandelt und die Abwässer der weiteren Spülgänge in einem Ausgleichsbecken gesammelt werden und dann mit den chemisch behandelten Abwässern des Wasch- und ersten Spülgangs vereinigt und anschließend durch Flotation und/oder Sedimentation mechanisch vorgereinigt werden.

## Claims

1. A process for washing fat-soiled washing in which the washing is contacted with an aqueous detergent-containing liquor and then rinsed at least once with water and the wastewater of the wash and rinse cycles is collected, chemically, mechanically and biologically cleaned and then returned to the washing process, the wastewater being cleaned by
a) complete or partial treatment in a fat separator after addition of a splitting agent and
b) mechanical precleaning by flotation and/or sedimentation
and the cleaned wastewater being used both for the rinse cycle and, after addition of the detergent, for the wash cycle, **characterized in that** the chemical cleaning step precedes the biological cleaning step.

2. A process as claimed in claim 1, **characterized in that** feathers or downs are used as the fat-soiled washing.

3. A process as claimed in claim 1, **characterized in that** leather is used as the fat-soiled washing.

4. A process for washing dye-soiled washing in which the washing is contacted with an aqueous detergent-containing liquor and then rinsed at least once with water and the wastewater of the wash and rinse cycles is collected, chemically, mechanically and biologically cleaned and then returned to the washing process, the wastewater being cleaned by
a) reaction with a suitable oxidizing agent and
b) mechanical precleaning by flotation and/or sedimentation and the cleaned wastewater being used both for the rinse cycle and, after addition of the detergent, for the wash cycle, **characterized in that** the chemical cleaning step precedes the biological cleaning step.

5. A process as claimed in claim 4, **characterized in that** ozone is used as the oxidizing agent.

6. A process as claimed in claim 4 or 5, **characterized in that** dyed cotton fabric is used as the washing.

7. A process as claimed in any of claims 1 to 6, **characterized in that** the water used in the wash and rinse cycle contains at least 80% cleaned wastewater.

8. A process as claimed in any of claims 1 to 7, **characterized in that** the quantity ratio between the washing and the wash liquor is between 1:5 and 1:15.

9. A process as claimed in any of claims 1 to 8, **characterized in that** the detergent is used in quantities of 1 to 5% by weight, based on the weight of the washing.

10. A process as claimed in any of claims 1 to 9, **characterized in that** the quantity ratio between the washing and the wash liquor per rinse cycle is between 1:5 and 1:40.

11. A process as claimed in any of claims 1 to 10, **characterized in that** the washing is rinsed with water several times, preferably 3 to 6 times.

12. A process as claimed in any of claims 1 to 11, **characterized in that** FeCl₃, AlCl₃ or a mixture of these compounds is used as the splitting agent.

13. A process as claimed in any of claims 1 to 11, **characterized in that** the splitting agent is used in quantities of 1 to 10 g/m³ wastewater and preferably in quantities of 2 to 5 g/m³ wastewater.

14. A process as claimed in any of claims 1 to 13, **characterized in that**, after the biological treatment step, the wastewater is cleaned in an aftertreatment step by flocculation in the presence of an added flocculating agent.

15. A process as claimed in claim 14, **characterized in that** anionically modified polyacrylamides are used in the aftertreatment step.

16. A process as claimed in claim 14 or 15, **characterized in that** the flocculating agent is used in quantities of 0.1 to 2 g/m³ wastewater and preferably in quantities of 0.5 to 1 g/m³ wastewater.

17. A process as claimed in any of claims 1 to 16, **characterized in that** only the wastewater of the wash cycle and the first rinse cycle is chemically pretreated and the wastewaters of the other rinse cycles are collected in an equalization tank and then combined with the chemically treated wastewaters of the wash cycle and the first rinse cycle and subsequently mechanically precleaned by flotation and/or sedimentation.

## Revendications

1. Procédé de lavage pour produit à laver rendu sale par des graisses, et que l'on met en contact avec un jus aqueux contenant des produits de lavage et qui ensuite est rincé au moins une fois avec de l'eau, les eaux usées du processus de lavage et de rinçage étant recueillies, purifiées chimiquement, mécaniquement et biologiquement et ensuite ramenées dans le processus de lavage, dans lequel la purification des eaux usées s'effectue totalement ou partiellement, par
a) un traitement après addition d'un agent de clivage dans un séparateur pour graisses et ensuite,
b) une pré-purification mécanique par flottation et/ou sédimentation et les eaux usées purifiées sont utilisées aussi bien pour l'étape de rinçage que pour l'étape de lavage après addition du produit de lavage,
**caractérisé en ce que**
la purification chimique s'effectue avant celle biologique.

2. Procédé selon la revendication 1,
**caractérisé en ce que**
comme produit à laver rendu sale par des graisses, on utilise des plumes ou des duvets.

3. Procédé selon la revendication 1,
**caractérisé en ce que**
comme produit à laver rendu sale par des graisses on utilise du cuir.

4. Procédé de lavage pour produit à laver rendu sale par des colorants, dans lequel le produit à laver est mis en contact avec un jus aqueux qui contient des produits de lavage et est rincé ensuite au moins une fois avec de l'eau, les eaux usées des étapes de lavage et de rinçage étant rassemblées, purifiées chimiquement, mécaniquement et biologiquement et ensuite ramenées dans le processus de lavage, dans lequel la purification des eaux usées s'effectue totalement ou partiellement,
a) par réaction avec un agent d'oxydation approprié et ensuite,
b) par pré-purification par flottation et/ou sédimentation mécanique et les eaux usées purifiées sont utilisées aussi bien pour l'étape de rinçage que pour l'étape de lavage après addition du produit de lavage,
**caractérisé en ce que**
la purification chimique s'effectue avant celle biologique.

5. Procédé selon la revendication 4,
**caractérisé en ce qu'**
on utilise comme agent d'oxydation de l'ozone.

6. Procédé selon l'une quelconque des revendications 4 ou 5,
**caractérisé en ce que**
comme produit à laver, on utilise un tissu en coton teint.

7. Procédé selon l'une quelconque des revendications 1 à 6,
**caractérisé en ce que**
l'eau employée dans l'étape de lavage et dans l'étape de rinçage contient pour au moins 80 % des eaux usées purifiées.

8. Procédé selon l'une quelconque des revendications 1 à 7,
**caractérisé en ce que**
le rapport en quantité entre le produit à laver et l'eau de lavage se situe entre 1 : 5 et 1 : 15.

9. Procédé selon l'une quelconque des revendications 1 à 8,
**caractérisé en ce que**
le produit de lavage est utilisé en des quantités allant de 1 à 5 % en poids rapporté au poids du produit à laver.

10. Procédé selon l'une quelconque des revendications 1 à 9,
**caractérisé en ce que**
le rapport en quantité entre le produit à laver et l'eau de rinçage se situe, entre 1 : 5 et 1 : 40 par étape de rinçage.

11. Procédé selon l'une quelconque des revendications 1 à 10,
**caractérisé en ce que**
le produit à laver est rincé plusieurs fois avec de l'eau, de préférence de 3 à 6 fois.

12. Procédé selon l'une quelconque des revendications 1 à 11,
**caractérisé en ce qu'**
on emploie comme agent de clivage, FeCl₃, AlCl₃ ou des mélanges de ces composés.

13. Procédé selon l'une quelconque des revendications 1 à 11,
**caractérisé en ce qu'**
on emploie l'agent de clivage en quantités comprises entre 1 et 10 g/m³ d'eaux usées, de préférence entre 2 et 5 g/m³ d'eaux usées.

14. Procédé selon l'une quelconque des revendications 1 à 13,
**caractérisé en ce qu'**
on purifie les eaux usées après la purification biologique dans un stade de retraitement par floculation en ajoutant un agent de floculation.

15. Procédé selon la revendication 14,
**caractérisé en ce qu'**
on emploie comme agent de floculation dans le retraitement, des polyacrylamides modifiés anioniquement,

16. Procédé selon l'une quelconque des revendications 14 ou 15,
**caractérisé en ce qu'**
on emploie l'agent de floculation en quantités comprises entre 0,1 et 2 g/m³ d'eaux usées, de préférence en quantités comprises entre 0,5 et 1 g/m³ d'eaux usées.

17. Procédé selon l'une quelconque des revendications 1 à 16,
**caractérisé en ce qu'**
on prétraite seulement chimiquement les eaux usées de l'étape de lavage et de la première étape de rinçage, et on rassemble les eaux usées des étapes ultérieures de rinçage dans un bassin d'équilibrage, puis on les réunit avec les eaux usées traitées chimiquement des étapes de lavage et du premier rinçage, ensuite on les pré-purifie mécaniquement par flottation et/ou sédimentation.
